# EUROPÄISCHE PATENTSCHRIFT

(11) **EP 1 041 043 B1**
(45) Veröffentlichungstag und Bekanntmachung des Hinweises auf die Patenterteilung: **15.10.2003**
(21) Anmeldenummer: 00106228.0
(22) Anmeldetag: 22.03.2000
(51) Int. Cl.: C02F 3/20, C02F 3/12, B01F 3/04

(54) **Tellerartiger Wasserbelüfter**
Water aerator of the plate type
Aérateur d'eau du type à plaques

(30) Priorität: 25.03.1999 DE 19913682
(43) Veröffentlichungstag der Anmeldung: 04.10.2000
(73) Patentinhaber: Jäger, Arnold, D-31303 Burgdorf (DE)
(72) Erfinder: Jäger, Andreas, Dr., 30559 Hannover (DE); Jäger, Christian, 60322 Frankfurt/M. (DE); Jäger, Sebastian, 30657 Hannover (DE); Jäger, Claudius, Boulder, CO 80304 (US)
(74) Vertreter: Depmeyer, Jochen

(56) Entgegenhaltungen:
- EP-A- 0 385 198
- DE-A- 3 829 666
- DE-A- 4 206 136
- US-A- 5 693 265

## Beschreibung

Die Erfindung betrifft einen tellerartigen Wasserbelüfter, insb. für die Wasseraufbereitung oder bei Abwäsern, mit einer starren, im wesentlichen ebenen Halterung und einer darauf angeordneten, zum Austritt der Luft feingeschlitzten Platte aus einem Elastonmer, wobei die Halterung einen oder mehrere von der Platte überdeckten, zum Zuführen der Luft ausgebildete Anschlüsse und einen senkrecht nach unten abgewinkelten, umlaufenden Rand aufweist, der von einem im wesentlichen u-förmigen Randteil der Platte umschlossen ist. Ein derartiger tellerartiger Wasserbelüfter wird beispielsweise in der Patentschrift US 5 693 265 beschrieben.

Bei diesen bekannten Wasserbelüftern wird durch den u-förmigen Randteil und den nach unten abgewinkelten Rand der Platte ein Formschluss erzielt. Dadurch soll die Befestigung der Platte ohne zusätzliche Befestigungsmittel gewährleistet werden, um so also z.B. auf angeschraubte Anpressrahmen verzichten zu können.

Diese vereinfachte Befestigung des Plattenrandes hat den Nachteil, dass sie insb. nach längerer Btriebszeit wegen der Alterung unzuverlässig und daher unbrauchbar werden kann.

Der Erfindung liegt die Aufgabe zugrunde, die Randbefestigung so auszubilden, ihre Zuverlässigkeit und Lebensdauer gesteigert werden können.

Zur Lösung dieser Aufgabe weist erfindungsgemäss die Halterung eine parallel zum umlaufenden Rand verlaufende Rippe in der Weise auf, dass zwischen der Rippe und dem Rand eine Umfangsnut gebildet ist, in die der innen gelegene Schenkel des u-förmigen Randteils der Platte spielfrei eingreift.

Der Eingriff des inneren Schenkels in die Umfangsnut führt deshalb zu einer gesteigerten Haltekraft, weil nunmehr ein Herausziehen des Schenkels aus seiner Nut nur unter Überwindung von Vakuumkräften möglich ist. In aller Regel ist dabei eine Trennung nur unter Einsatz von Demontagewerkzeugen möglich, während durch das normale Betriebsgeschehen auch nach längerer Betriebszeit ein Ablösen der Plattenränder nicht möglich ist.

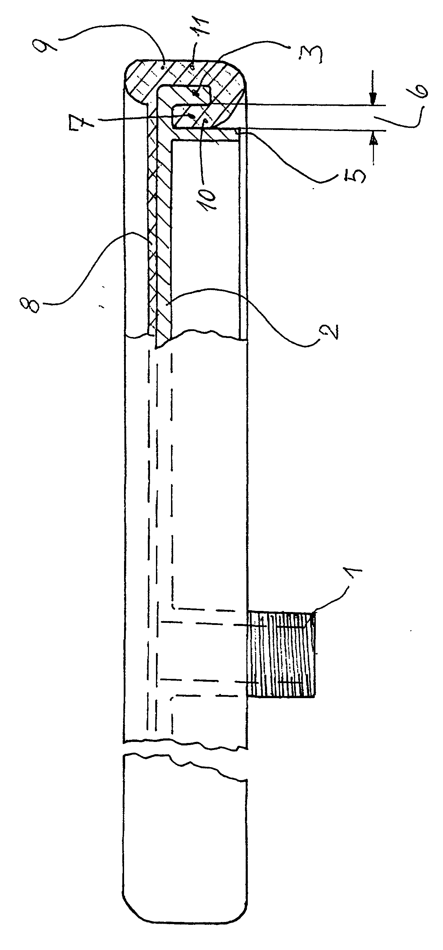

Weitere Einzelheiten der Erfindung werden anhand der Zeichnung erläutert, in der ein Ausführungsbeispiel der Erfindung dargestellt ist. Die Abbildung zeigt einen Tellerblüfter in teilweise geschnittener Seitenansicht.

Der im Grundriss vorzugweise kreisrunde Belüfter wird von unten her über einen Stutzen 1 gespeist; er ist fester Bestandteil einer steifen Halterung mit Grundkörper 2, der einen senkrecht nach unten abgewinkelten, umlaufenden Rand 3 aufweist. Parallel zum Rand 3 verlauft - ebenfalls senkrecht nach unten gerichtet - eine umlaufende Rippe 5, die jedoch länger ist als der Rand 3 ( Länge vom Grundkörper 2 aus gemessen ). Die Wandstärken der Rippe 5 und des Randes 3 sind im wesentlichen gleich gross, ihr gegenseitiger Abstand 6 entspricht etwa der Wandstärke des Randes 3. Somit entsteht zwischen dem Rand 3 und der Rippe 5 eine Umfangsnut 7.

Lose auf dem Grundkörper 2 liegt eine mit feinen Schlitzen versehene, aus Gummi bestehende Platte 8 auf, die zum Austritt feiner Luftbläschen geeignet ist, wenn vorgespannte Luft in den Stutzen 1 und damit zwischen Platte 8 und Grundkörper 2 geleitet wird.

Zur Befestigung der Platte 8 auf der Halterung ist die Platte 8 mit einem im wesentlichen u-förmigen, umlaufenden Rand 9 versehen, dessen Schenkel 10 und 11 den Rand 3 zwischen sich einschliessen. Ferner füllt der nach oben gerichtete freie Schenkel 10 die Unfangsnut 7 spielfrei aus.

Zur Montage der Platte 8 muss der Schenkel 10 gewissermassen in die Umfangnut 7 eingerollt werden. Im Falle einer Demontage müssen zudem scharfe Werkzeuge bnutzt werden, um den Schenkel 10 aus der Umfangsnut 7 herausführen zu können, was ohnehin nur unter Überwindung von Vakuumkräften möglich ist. Daher ergibt sich für den Betrieb eine dauerhafte, feste Verankerung der Ränder der Platte 8.

## Patentansprüche

1. Tellerartiger Wasserbelüfter mit einer starren, im wesentlichen ebenen Halterung und einer darauf angeordneten, zum Austritt der Luft feingeschlitzten Platte aus einem Elastomer, wobei die Halterung einen oder mehrere von der Platte überdeckten, zum Zuführen der Luft ausgebildete Anschlüsse und einen senkrecht nach unten abgewinkelten, umlaufenden Rand aufweist, der von einem im wesentlichen u-förmigen Randteil der Platte umschlossen ist, **dadurch gekennzeichnet, dass** die Halterung eine parallel zum umlaufenden Rand (3) verlaufende Rippe (5) aufweist in der Weise, dass zwischen der Rippe und dem Rand eine Umfangnut (7) gebildet ist, in die der innen gelegene Schenkel (10) des u-förmigen Randteils (9) der Platte (8) spielfrei eingreift.

2. Wasserbelüfter nach Anspruch 1, **dadurch gekennzeichnet, dass** die Breite der Umfangsnut (7) zumindest im wesentlichen der Wandstärke des Randes (3) entspricht.

3. Wasserbelüfter nach Anspruch 1, **dadurch gekennzeichnet, dass** die Rippe (5) den Rand (3) nach unten hin überragt.

4. Wasserbelüfter nach Anspruch 1, **dadurch gekennzeichnet, dass** die Tiefe der Umfangsnut (7) wesentlich grösser ist als deren Breite (6).

## Claims

1. Plate-like water aerator, having a rigid, substantially flat mounting support and a plate, which is formed from an elastomeric material, said plate being disposed on said support and being provided with fine slots for the discharge of air, the mounting support including one or more connections, which are covered by the plate and are provided for the supply of air, and a circumferential edge, which is bent-over downwardly at right angles, said edge being surrounded by a substantially U-shaped edge portion of the plate, **characterised in that** the mounting support includes a rib (5), which extends parallel to the circumferential edge (3) in such a manner that a circumferential groove (7) is formed between the rib and the edge, the internally situated leg (10) of the U-shaped edge portion (9) of the plate (8) engaging in said groove in a clearance-free manner.

2. Water aerator according to claim 1, **characterised in that** the width of the circumferential groove (7) corresponds at least substantially to the wall thickness of the edge (3).

3. Water aerator according to claim 1, **characterised in that** the rib (5) protrudes downwardly beyond the edge (3).

4. Water aerator according to claim 1, **characterised in that** the depth of the circumferential groove (7) is essentially greater than the width (6) thereof.

## Revendications

1. Aérateur d'eau de type à disque, comprenant une pièce de fixation rigide sensiblement plane et un plateau disposé dessus, fendu finement pour la sortie de l'air et en un élastomère, la pièce de fixation ayant un ou plusieurs raccords recouverts par le plateau, et constitués pour l'apport de l'air et ayant un bord faisant le tour, coudé perpendiculairement vers le bas et entouré d'une partie de bord du plateau sensiblement en forme de U, **caractérisé en ce que** la pièce de fixation a une nervure (5) descendant parallèlement au bord (3) faisant le tour, de manière à former entre la nervure et le bord une gorge (7) de pourtour dans laquelle pénètre sans jeu la branche (10) tournée vers l'intérieur de la partie (9) de bord en forme de U du plateau (8).

2. Aérateur d'eau suivant la revendication 1, **caractérisé en ce que** la largeur de la gorge (7) de pourtour correspond au moins sensiblement à l'épaisseur de la paroi du bord (3).

3. Aérateur d'eau suivant la revendication 1, **caractérisé en ce que** la nervure (5) dépasse du bord (3) vers le bas.

4. Aérateur d'eau suivant la revendication 1, **caractérisé en ce que** la profondeur de la gorge (7) de pourtour est sensiblement plus grande que sa largeur (6).
